# EUROPÄISCHE PATENTSCHRIFT

(11) **EP 2 165 862 B1**
(45) Veröffentlichungstag und Bekanntmachung des Hinweises auf die Patenterteilung: **18.04.2012**
(21) Anmeldenummer: 09009314.7
(22) Anmeldetag: 17.07.2009
(51) Int. Cl.: B60G 3/26, B62D 17/00

(54) **Vorrichtung zum Verstellen eines Rades einer Radaufhängung**
Device for adjusting a wheel of a wheel suspension
Dispositif de réglage d'une roue d'une suspension de roue

(30) Priorität: 23.09.2008 DE 102008048567
(43) Veröffentlichungstag der Anmeldung: 24.03.2010
(73) Patentinhaber: Audi AG, 85045 Ingolstadt (DE)
(72) Erfinder: Meitinger, Karl-Heinz, 83308 Trostberg (DE); Michel, Wilfried, 93339 Riedenburg (DE); Müller, Hugo, 86701 Rohrenfels-Ballersdorf (DE); Kossira, Christoph, 85053 Ingolstadt (DE); Schmid, Wolfgang, 85354 Freising (DE)
(74) Vertreter: Asch, Konrad

(56) Entgegenhaltungen:
- EP-A1- 1 795 384
- EP-A1- 2 060 416
- DE-A1- 3 928 135
- DE-A1-102008 011 367
- FR-A1- 2 910 845
- US-B1- 6 406 036

## Beschreibung

Die Erfindung betrifft eine Vorrichtung zum Verstellen eines Rades einer Radaufhängung, insbesondere für Kraftfahrzeuge, gemäß dem Oberbegriff des Patentanspruches 1.

Aus der DE 39 28 135 A1 ist eine gattungsgemäße Vorrichtung bekannt, bei der zur Verstellung des Sturzes und der Spur des Rades einer Radaufhängung nicht der gesamte Radträger, sondern nur das Rad mit seiner Wälzlagerung entsprechend verstellt wird. Dazu ist ein als zweiarmiger Stellhebel ausgeführtes Aktuatorjoch mit dem sphärisch ausgebildeten Außenring des Wälzlagers fest verbunden, auf den zwei räumlich voneinander getrennte Aktuatoren wirken. Die Aktuatoren können hydraulisch betätigte Stellzylinder oder elektromotorisch betätigte Stellspindeln sein. Über die beiden Aktuatoren sind die Radführungskräfte und die in Umfangsrichtung wirkenden, weit höheren Bremsmomente abzustützen, wozu die Aktuatoren und deren gelenkige Verbindungen mit dem Stellhebel und dem Radträger entsprechend robust und großvolumig auszuführen sind.

Die oben erwähnten Aktuatoren sind mit ihrem Fußpunkt jeweils am Radträger über Kugelgelenke verbunden. Mit ihrer gegenüberliegenden zweiten Anlenkung greifen sie am Aktuatorjoch an. Ändern die Aktuatoren je nach den, von der Steuerung vorgegebenen Verstellwegen ihre Länge, so wird über das Aktuatorjoch der Radträger in Spur- und/oder Sturz geschwenkt. Der Schwenkmittelpunkt wird durch eine Kugelkalotte bestimmt, in der das Wälzlager schwenkbar über den Radträger verstellt wird. Das Aktuatorjoch trägt außerdem einen Bremssattel, der mit einer Bremsscheibe des Fahrzeugrades zusammenwirkt. Die Aktuatoren müssen daher nicht nur die Verstellkräfte aufbringen, sondern in einer Bremsbetätigung auch das erzeugte Bremsdrehmoment aufnehmen, das ein Vielfaches der anderen Kräfte und Momente beträgt, die auf die Aktuatoren einwirken. Die Aktuatoren sind daher entsprechend groß zu dimensionieren.

Aufgabe der Erfindung ist es, eine Vorrichtung der gattungsgemäßen Art vorzuschlagen, mittels der mit baulich geringem Mehraufwand eine verbesserte Abstützung und Einleitung der vom Rad und von Bremssituationen ausgehenden Kräfte und Momente in die Radaufhängung gegeben ist.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Nach dem kennzeichnenden Teil des Patentanspruches 1 ist sinngemäß zwischen der Stelleinheit zur Spur- und/oder Sturzeinstellung des Rades und dem Radträger ein Drehmomentübertragungselement geschaltet, das ein Drehmoment von der Stelleinheit auf den Radträger überträgt. Das Drehmoment, insbesondere ein Bremsdrehmoment, wird somit nicht von den Aktuatoren der Stelleinheit aufgenommen, sondern auf den Radträger weitergeleitet. Die Aktuatoren der Stelleinheit können somit im Vergleich zum Stand der Technik zur Aufnahme von geringeren Kräften und Momenten dimensioniert werden.

Alternativ und/oder zusätzlich kann die Stelleinheit auch eine Antriebseinheit für einen Radantrieb, etwa einen Radnabenantrieb, tragen. Mittels des Aus der EP 2 060 416 A1 ist eine Verstellvorrichtung für eine Radaufhängung bekannt, bei der die Stelleinheit einen zwischen einer aufbauseitigen Basisplatte und einem achsseitigen Radträger angeordneten Zwischenträger aufweist, an dem der Radträger um eine erste Schwenkachse sowie um eine die erste Schwenkachse kreuzende zweite Schwenkachse schwenkbar gelagert ist.

Aus der EP 1 795 384 A1 ist eine weitere Vorrichtung zum Verstellen eines Rades einer Radaufhängung bekannt.

Drehmomentübertragungselements kann ein von der Antriebseinheit auf die Stelleinheit ausgeübtes Stützmoment weiter auf den Radträger übertragen werden.

Das Drehmomentübertragungselement kann bevorzugt verdrehsteif bzw. torsionssteif sein, um eine Drehmomentübertragung von der Stelleinheit auf den Radträger zu gewährleisten. Außerdem kann das Drehmomentübertragungselement ausreichend elastisch und/oder nachgiebig in der Verstelleinrichtung des Rades gestaltet sein, um eine Spur- und/oder Sturzeinstellung des Fahrzeugrades zu ermöglichen.

Das Drehmomentübertragungselement kann als beliebig gestaltetes Kupplungselement realisiert werden, etwa als ein Kardangelenk oder ein kardanähnliches Gelenk, etwa ein Gleichlaufgelenk. Alternativ kann das Drehmomentübertragungselement ein Metallbalg sein, der zwischen dem Radträger und der Stelleinheit geschaltet ist. Für eine bauraumreduzierte Anordnung ist es von Vorteil, wenn das Drehmomentübertragungselement radial außerhalb des Rad-Lagers angeordnet ist. Außerdem ist es im Hinblick auf eine bauraumreduzierte Ausführung bevorzugt, das Drehmomentübertragungselement als Balg, insbesondere Metallbalg, auszuführen, der sowohl am Radträger als auch an der Stelleinheit verschraubt oder verschweißt ist.

Mit dem erfindungsgemäßen Drehmomentübertragungselement wird zwischen der Stelleinheit und dem Radträger eine zusätzliche Verbindung vorgesehen, die in Verstellrichtung des Rades nachgiebig, in Umfangsrichtung des Rades jedoch weitgehendst unnachgiebig ist. Über diese Verbindung werden in vorteilhafter Weise die weit höheren, in Umfangsrichtung wirkenden Bremsmomente aufgenommen, so dass über den zumindest einen Aktuator nur die Radführungskräfte abzustützen sind. Der Aktuator und dessen konstruktive Anbindung können somit kleiner und leichter ausgeführt sein, wodurch auch der Anteil der ungefederten Massen der Radaufhängung verringerbar ist.

Der oben bereits erwähnte Metallbalg ist ein an dem Radträger und an dem Stellhebel der Stelleinheit befestigtes, flächiges und in Verstellrichtung gewelltes Verbindungsteil. Dieses ist bei einer konstruktiv besonders einfachen und gewichtsgünstigen Gestaltung in Umfangsrichtung beliebig steif ausführbar, während es in der Verstellrichtung aufgrund der gewellten Ausführung im Bereich der abzudeckenden Stellwege bei geringen Verstellkräften elastisch verformbar ist.

Der Metallbalg kann an der das Kalottenteil aufnehmenden Nabe des Radträgers und an axialen Fortsätzen des Stellhebels befestigt sein und die Möglichkeit eröffnen, mehrere Verstellrichtungen bzw. Freiheitsgrade gegebenenfalls auch gleichzeitig zu bedienen.

Der Metallbalg kann bevorzugt aus dünnwandigem Metall, insbesondere Stahlblech, gefertigt sein und kann somit bei einer baulich und fertigungstechnisch günstigen Konstruktion hohe Belastungen in Umfangsrichtung aufnehmen.

Schließlich kann der Stellhebel mit zwei räumlich zueinander versetzten und am Radträger abgestützten Aktuatoren zum Verstellen des Sturzes und der Spur des Rades gelenkig verbunden sein, wobei die weitere Verbindung in beiden Stellrichtungen nachgiebig ausgelegt ist.

Das Drehmomentübertragungselement kann in einer weiteren Ausgestaltung der Erfindung in konstruktiv einfacher Weise eine Gleitführung sein, die zwischen dem Radträger und der Stelleinheit angeordnet ist und die in Umfangsrichtung des Rades formschlüssig wirkt. Dies kann zum Beispiel ein Führungsbolzen einerseits sein, der in eine korrespondierende Lagerbüchse andererseits einragt.

Bevorzugt kann die Gleitführung durch Stege an dem Wälzlager-Außenring gebildet sein, die mit korrespondierenden Nuten in der Kalottenaufnahme des Radträgers zusammenwirken. Das Wälzlager ist somit zwar schwenkbar, aber in Umfangsrichtung formschlüssig im Radträger gehalten und überträgt auftretende Bremsmomente unmittelbar und ohne Beaufschlagung des Stellhebels in den Radträger.

Ein Ausführungsbeispiel der Erfindung ist im folgenden mit weiteren Einzelheiten näher erläutert.

Die schematische Zeichnung zeigt in:
- Fig. 1: eine Radaufhängung für Kraftfahrzeuge mit einem an Lenkern geführten Radträger, in dem ein Rad drehbar und schwenkbar gelagert ist, deren Sturz und Spur über zwei Aktuatoren und eine Stelleinheit verstellbar ist, in einer Ansicht in Fahrtrichtung des Kraftfahrzeuges; und
- Fig. 2: eine Draufsicht auf die Stelleinheit und die Akuatoren der Radaufhängung gemäß Fig. 1.

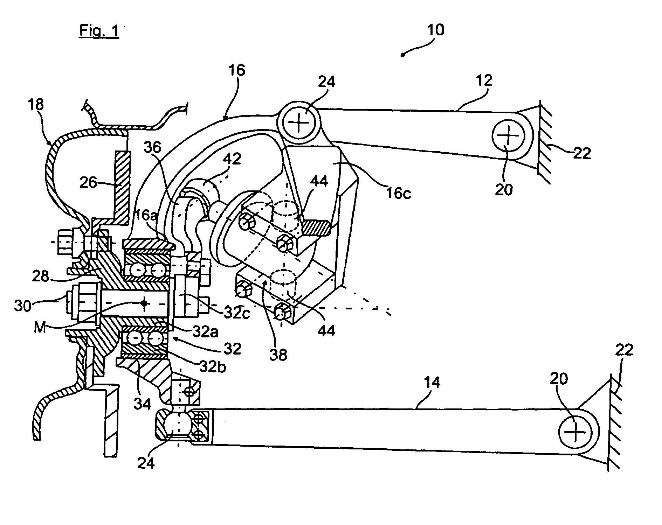

In der Fig. 1 ist mit 10 eine hintere Radaufhängung für Kraftfahrzeuge bezeichnet, die sich im Wesentlichen aus oberen und unteren Lenkern 12, 14, einem mit den Lenkern 12, 14 verbundenen Radträger 16 und einem im Radträger 16 drehbar gelagerten Rad 18 zusammensetzt.

Die Lenker 12, 14 können räumlich aufgeteilte Einzellenker und/oder Dreieckslenker sein, die über Schwenklager 20 mit dem Aufbau des Kraftfahrzeuges (oder einem Hilfsrahmen) verbunden sind und an denen der Radträger 16 über weitere Lager 24 nicht lenkbar angelenkt ist.

Das Rad 18 ist mit einer Bremsscheibe 26 der Betriebsbremse des Kraftfahrzeuges an einer Flanschwelle 28 befestigt, die wiederum in Verbindung mit einer Zentralschraube 30 mit dem Innenring 32a eines Wälzlagers bzw. eines doppelreihigen Kugellagers 32 verbunden ist.

Die Außenschale 32b des Wälzlagers 32 ist an ihrem Außenumfang sphärisch ausgebildet und in einer in die Nabe 16a des Radträgers 16 fest eingesetzten Kalottenaufnahme 34 verschwenkbar geführt. Das Rad 18 kann dementsprechend um einen durch die Kalottenaufnahme 34 definierten Schwenkpunkt M verschwenkt werden.

An die Außenschale 32b des Wälzlagers 32 ist ein Flansch 32c angeformt, an dem ein zweiarmiger Stellhebel 36 mittels Schrauben (ohne Bezugszeichen) befestigt ist.

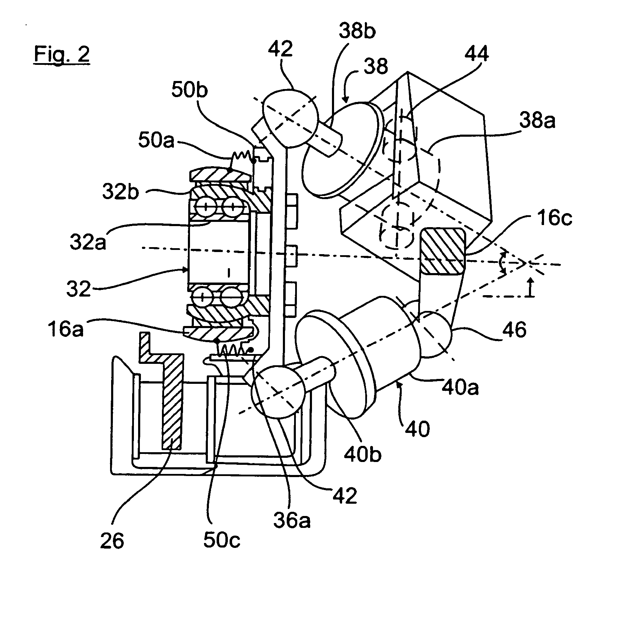

An dem Stellhebel 36 sind zwei elektromotorische Aktuatoren 38, 40 (vergleiche Fig. 2) über Kugelgelenke 42 angelenkt, die andererseits mit ihrem Gehäuse 38a, 40a über Gelenke 44, 46 an einem an den oberen Arm 16b des Radträgers 16 angeformten Ausleger 16c abgestützt sind.

Die Aktuatoren 38, 40 sind räumlich zwischen dem Ausleger 16c und dem doppelarmigen Hebel 36 so angeordnet, dass sie zunächst eine stabile Radführung des Rades 18 sicherstellen und des weiteren eine Verstellung des Sturzes des Rades 18 bei Längenveränderung des Aktuators 38 und eine Verstellung der Spur des Rades 18 über den Aktuator 40 steuern. Die Längenveränderung wird durch entsprechende Betätigung der Stellspindeln 38b, 40b bewirkt. Zur Fig. 2 sei bemerkt, dass der besseren Darstellung wegen der zweiarmige Hebel geradlinig erscheint. Tatsächlich sind aber die durch die Kugelgelenke 42 definierten Anlenkpunkte des Stellhebels 36 einmal vor und einmal oberhalb des besagten Radschwenkpunktes M.

An dem Stellhebel 36 ist des Weiteren der Bremssattel 48 der Betriebsbremse des Kraftfahrzeuges befestigt.

Das Wälzlager 32 mit dem Stellhebel 36 und den Aktuatoren 38, 40 bilden eine Stelleinheit, mittels der das Rad 18 mit der Bremsscheibe 26 und dem Bremssattel 48 zur Einstellung eines definierten Sturzes und einer definierten Spur verstellbar ist. Damit können abhängig von fahrdynamischen Parametern die Kurvenstabilität, die Bremsstabilität sowie Steuertendenzen (Untersteuern, Übersteuern) des Kraftfahrzeuges entsprechend beeinflusst werden.

Zur Abstützung des bei einer Bremsung des Kraftfahrzeuges über die Betriebsbremse 26, 48 auftretenden, in Umfangsrichtung des Rades 18 gerichteten Bremsmomentes ist zwischen dem Radträger 16 und dem Stellhebel 36 eine zusätzliche Verbindung vorgesehen.

Die Verbindung ist durch einen ringförmigen Balg 50 aus dünnwandigem Stahlblech gebildet, dessen einer Flanschring 50a an der Nabe 16a des Radträgers 16 und dessen anderer Flanschring 50b an axial gerichteten Fortsätzen 36a des Stellhebels 36 zum Beispiel durch Schweißverbindungen befestigt ist. Der Balg 50 ist in der Fig. 1 aus Gründen der Übersichtlichkeit weggelassen und nur in der Fig. 2 gezeigt.

Zwischen den Flanschringen 50a, 50b ist der Balg 50 mit umlaufenden Wellungen 50c ausgeführt, die in den Verstellrichtungen des Stellhebels 36 elastisch wirken. In Umfangsrichtung ist der Balg 50 hingegen in hohem Maße torsionssteif und leitet auftretende Bremsmomente unmittelbar vom Bremssattel 48 über den Stellhebel 36 in den Radträger 16 ein, ohne die Aktuatoren 38, 40 und deren Lagerungen 42, 44, 46 zu belasten.

Die Erfindung ist nicht auf das dargestellte Ausführungsbeispiel beschränkt. In einer vereinfachten Ausführung kann auch nur ein Aktuator zum Beispiel zur Verstellung der Spur des Rades 18 (zur Erzielung einer definierten Eigenlenkung) vorgesehen sein. Der andere Lagerpunkt des Stellhebels 36 kann dann nur zur Sicherstellung einer stabilen Radführung als entsprechende Lagerstelle ohne Aktuator ausgelegt sein.

Das zusätzliche Verbindungsteil kann auch durch einen oder mehrere segmentförmige Abschnitte des Balges 50 ausgeführt sein.

Bei einer nur in einer Verstellrichtung ausgelegten Stelleinheit 32, 36, 38 oder 40 kann eine Bremsmomentabstützung dadurch bewerkstelligt werden, dass zwischen der Stelleinrichtung und dem Radträger 16 eine zusätzliche Gleitführung vorgesehen wird, die in Radumfangsrichtung formschlüssig wirkt.

Diese Gleitführung kann in besonders einfacher Weise hergestellt werden, indem an den Außenring 32b des Wälzlagers 32 diametral angeordnete, sphärisch gekrümmte Stege (nicht dargestellt) angeformt sind, die in korrespondierende Nuten der Kalottenaufnahme 34 in Umfangsrichtung formschlüssig eingreifen. Eine Bremsmomentabstützung erfolgt dann vom Bremssattel 48 über den Stellhebel 36 und den Lageraußenring 32b zum Radträger 16.

Die Aktuatoren 38 und/oder 40 können elektromotorisch verstellbare Kugelgewindetriebe oder hydraulisch betätigte Stellzylinder an sich bekannter Bauart sein, die über entsprechende elektronische Steuerungen nach Maßgabe fahrdynamischer Parameter und/oder willkürlich steuerbarer Fahrprogramme entsprechende Radeinstellungen steuern.

## Patentansprüche

1. Vorrichtung zum Verstellen eines Rades (18) einer Radaufhängung eines Fahrzeuges, mit einem Radträger (16), in dem das Rad (18) drehbar gelagert ist, das über ein Lager (32) drehbar im Radträger (16) gelagert ist, das mit der Stelleinheit zusammenwirkt, wobei insbesondere ein Außenring (32b) des Lagers (32) in einer Kalottenaufnahme (34) des Radträgers (16) schwenkbar angeordnet ist, und einer Stelleinheit (32, 36, 38, 40) zur Spur- und/oder Sturzeinstellung des Rades (18) abhängig von fahrdynamischen Parametern, welche Stelleinheit (32, 36, 38, 40) zumindest teilweise ein mit dem Rad (18) zusammenwirkendes Bremsaggregat und/oder eine Antriebseinheit für einen Radantrieb, etwa einen Radnabenantrieb, trägt, **dadurch gekennzeichnet, dass** zwischen der Stelleinheit (32, 36, 38, 40) und dem Radträger (16) ein Drehmomentübertragungselement (50) geschaltet ist, das ein Drehmoment, insbesondere ein Bremsdrehmoment und/oder ein von der Antriebseinheit auf die Stelleinheit ausgeübtes Stützmoment, von der Stelleinheit (32, 36, 38, 40) auf den Radträger (16) überträgt.

2. Vorrichtung nach Anspruch 1, **dadurch gekennzeichnet, dass** die Stelleinheit einen Bremssattel (48) des Bremsaggregats trägt, der mit einer Bremsscheibe (26) des Fahrzeugrades (18) zusammenwirkt, welche Stelleinheit das bei Bremsbetätigung erzeugte Bremsdrehmoment aufnimmt.

3. Vorrichtung nach Anspruch 1 oder 2, **dadurch gekennzeichnet, dass** das Drehmomentübertragungselement (50) in einer Verstellrichtung des Rades (18) nachgiebig, und in einer Umfangsrichtung des Rades (18) verdrehsteif bzw. torsionssteif ist.

4. Vorrichtung nach Anspruch 1, 2 oder 3, **dadurch gekennzeichnet, dass** das Drehmomentübertragungselement (50) radial außerhalb des Lagers (32) angeordnet ist.

5. Vorrichtung nach einem der Ansprüche 1 bis 4, **dadurch gekennzeichnet, dass** die Stelleinheit (32, 36, 38, 40) einen Stellhebel (36) aufweist, der den Bremssattel trägt, und/oder auf dem sich das Drehmomentübertragungselement (50) abstützt, an welchen Stellhebel (36), insbesondere zumindest ein Aktuator (38, 40) angelenkt ist, der sich gegenüberliegend am Radträger (16) gelenkig abstützt.

6. Vorrichtung nach einem der vorhergehenden Ansprüche, **dadurch gekennzeichnet, dass** das Drehmomentübertragungselement (50) ein Kardangelenk oder ein kardanähnliches Gelenk, etwa ein Gleichlaufgelenk ist.

7. Vorrichtung nach einem der Ansprüche 1 bis 5, **dadurch gekennzeichnet, dass** das Drehmomentübertragungselement (50) zumindest ein an dem Radträger (16) und an der Stelleinheit (32, 36, 38, 40) befestigtes, flächiges und in Verstellrichtung gewelltes Verbindungsteil (50) ist.

8. Vorrichtung nach Anspruch 7, **dadurch gekennzeichnet, dass** das Verbindungsteil ein ringförmiger Balg (50) ist, der insbesondere an der die Kalottenaufnahme (34) aufnehmenden Nabe (16a) des Radträgers (16) und am Stellhebel (36) der Stelleinheit (32, 36, 38, 40) befestigt ist.

9. Vorrichtung nach den Ansprüchen 7 oder 8, **dadurch gekennzeichnet, dass** das Verbindungsteil (50) aus dünnwandigem Metall, insbesondere Stahlblech, gefertigt ist.

10. Vorrichtung nach einem der vorhergehenden Ansprüche 5 bis 9, **dadurch gekennzeichnet, dass** der Stellhebel (36) mit zwei räumlich zueinander versetzten und am Radträger (16) abgestützten Aktuatoren (38, 40) zum Verstellen des Sturzes und der Spur des Rades (18) gelenkig verbunden ist.

11. Vorrichtung nach Anspruch 10, **dadurch gekennzeichnet, dass** das Drehmomentübertragungselement (50) eine Gleitführung ist, die zwischen dem Radträger (16) und der Stelleinheit (32, 36, 38, 40) angeordnet ist und die in Umfangsrichtung des Rades (18) formschlüssig wirkt.

12. Vorrichtung nach Anspruch 11, **dadurch gekennzeichnet, dass** die Gleitführung durch Stege an dem Wälzlager-Außenring (32b) gebildet ist, die mit korrespondierenden Nuten der Kalottenaufnahme (34) des Radträgers (16) zusammenwirken.

## Claims

1. Device for adjusting a wheel (18) of a wheel suspension of a vehicle, comprising a wheel carrier (16) in which the wheel (18) is rotatably mounted, which wheel is rotatably mounted in the wheel carrier (16) via a bearing (32) which cooperates with the adjustment unit, an outer race (32b) of the bearing (32) in particular being pivotally arranged in a cup recess (34) of the wheel carrier (16), and an adjustment unit (32, 36, 38, 40) for the toe and/or camber adjustment of the wheel (18) as a function of parameters relating to driving dynamics, which adjustment unit (32, 36, 38, 40) carries, at least in part, a brake assembly unit which cooperates with the wheel (18), and/or a drive unit for a wheel drive, for example a wheel hub drive, **characterised in that** a torque transmission element (50) is connected between the adjustment unit (32, 36, 38, 40) and the wheel carrier (16), which element transmits a torque, in particular a braking torque and/or a support moment exerted on the adjustment unit by the drive unit, from the adjustment unit (32, 36, 38, 40) to the wheel carrier (16).

2. Device according to claim 1, **characterised in that** the adjustment unit carries a brake calliper (48) of the brake assembly, which calliper cooperates with a brake disc (26) of the vehicle wheel (18), which adjustment unit absorbs the braking torque produced when the brake is actuated.

3. Device according to either claim 1 or claim 2, **characterised in that** the torque transmission element (50) is resilient in an adjustment direction of the wheel (18), and twist-resistant or torsion-resistant in a circumferential direction of the wheel (18).

4. Device according to claim 1, claim 2 or claim 3, **characterised in that** the torque transmission element (50) is arranged radially outside the bearing (32).

5. Device according to any one of claims 1 to 4, **characterised in that** the adjustment unit (32, 36, 38, 40) comprises an adjusting lever (36) which carries the brake calliper, and/or on which the torsion transmission element (50) is supported, to which adjusting lever (36) in particular at least an actuator (38, 40) is articulated, which on the opposite side is supported in an articulated manner on the wheel carrier (16).

6. Device according to any one of the preceding claims, **characterised in that** the torque transmission element (50) is a Cardan joint or a joint similar to a Cardan joint, for example a homokinetic joint.

7. Device according to any one of claims 1 to 5, **characterised in that** the torque transmission element (50) is at least a connection port (50) which is planar, corrugated in the adjustment direction, and attached to the wheel carrier (16) and to the adjustment unit (32, 36, 38, 40).

8. Device according to claim 7, **characterised in that** the connection port is an annular bellows (50), which is in particular attached to the hub (16a) of the wheel carrier (16), which hub accommodates the cup recess (34), and to the adjusting lever (36) of the adjustment unit (32, 36, 38, 40).

9. Device according to either claim 7 or claim 8, **characterised in that** the connection port (50) is produced from thin-walled metal, in particular sheet steel.

10. Device according to any one of claims 5 to 9, **characterised in that** the adjusting lever (36) is articulated to two actuators (38, 40), which are spatially offset from one another and supported on the wheel carrier (16), for adjusting the camber and the toe of the wheel (18).

11. Device according to claim 10, **characterised in that** the torque transmission element (50) is a slideway which is arranged between the wheel carrier (16) and the adjustment unit (32, 36, 38, 40) and which operates with a positive fit in the circumferential direction of the wheel (18).

12. Device according to claim 11, **characterised in that** the slideway is formed on the roller bearing outer race (32b) by means of webs which cooperate with corresponding grooves in the cup recess (34) of the wheel carrier (16).

## Revendications

1. Dispositif pour régler une roue (18) d'une suspension de roue d'un véhicule, comprenant un support de roue (16), dans lequel est montée à rotation la roue (18), qui est montée à rotation via un palier (32) dans le support de roue (16), qui coopère avec l'unité de réglage, dans lequel en particulier un anneau externe (32b) du palier (32) est agencé à pivotement dans un logement de type calotte (34) du support de roue (16), et une unité de réglage (32, 36, 38, 40) pour régler l'écartement et/ou le déport de la roue (18) en fonction de paramètres dynamiques de conduite, laquelle unité de réglage (32, 36, 38, 40) porte au moins en partie un groupe de freinage coopérant avec la roue (18) et/ou une unité d'entraînement pour un entraînement de roue, éventuellement un entraînement de moyeu de roue, **caractérisé en ce qu'**un élément de transmission de couple (50) est monté entre l'unité de réglage (32, 36, 38, 40) et le support de roue (16), lequel élément de transmission de couple transmet un couple, en particulier un couple de freinage et/ou un couple d'appui exercé par l'unité d'entraînement sur l'unité de réglage, de l'unité de réglage (32, 36, 38, 40) au support de roue (16).

2. Dispositif selon la revendication 1, **caractérisé en ce que** l'unité de réglage porte un étrier de frein (48) du groupe de freinage, qui coopère avec un disque de frein (26) de la roue de véhicule (18), laquelle unité de réglage reçoit le couple de freinage généré lors de l'actionnement du frein.

3. Dispositif selon la revendication 1 ou 2, **caractérisé en ce que** l'élément de transmission de couple (50) est flexible dans une direction de réglage de la roue (18) et est rigide à la rotation ou à la torsion dans une direction périphérique de la roue (18).

4. Dispositif selon la revendication 1, 2 ou 3, **caractérisé en ce que** l'élément de transmission de couple (50) est agencé radialement à l'extérieur du palier (32).

5. Dispositif selon l'une quelconque des revendications 1 à 4, **caractérisé en ce que** l'unité de réglage (32, 36, 38, 40) présente un levier de réglage (36) qui porte l'étrier de frein et/ou sur lequel s' appuie l'élément de transmission de couple (50), sur lequel levier de réglage (36) est articulé en particulier au moins un actionneur (38, 40), qui s'appuie de manière articulée en regard sur le support de roue (16).

6. Dispositif selon l'une quelconque des revendications précédentes, **caractérisé en ce que** l'élément de transmission de couple (50) est un joint de Cardan ou un joint de type à Cardan, par exemple un joint homocinétique.

7. Dispositif selon l'une quelconque des revendications 1 à 5, **caractérisé en ce que** l'élément de transmission de couple (50) est au moins une pièce de raccord (50) fixée au support de roue (16) et à l'unité de réglage (32, 36, 38, 40), plate et ondulée dans la direction de réglage.

8. Dispositif selon la revendication 7, **caractérisé en ce que** la pièce de raccord est un soufflet annulaire (50), qui est fixé en particulier au moyeu (16a) du support de roue (16) recevant le logement de type calotte (34) et au levier de réglage (36) de l'unité de réglage (32, 36, 38, 40).

9. Dispositif selon la revendication 7 ou 8, **caractérisé en ce que** la pièce de raccord (50) est fabriquée d'un métal à paroi mince, en particulier d'une tôle d'acier.

10. Dispositif selon l'une quelconque des revendications 5 à 9, **caractérisé en ce que** le levier de réglage (36) est raccordé de manière articulée à deux actionneurs (38, 40) décalés spatialement l'un de l'autre et appuyés au support de roue (16) pour régler le déport et l'écartement de la roue (18).

11. Dispositif selon la revendication 10, **caractérisé en ce que** l'élément de transmission de couple (50) est une coulisse qui est agencée entre le support de roue (16) et l'unité de réglage (32, 36, 38, 40) et qui agit par adaptation de forme dans la direction périphérique de la roue (18).

12. Dispositif selon la revendication 11, **caractérisé en ce que** la coulisse est formée sur l' anneau externe (32b) du roulement par des barrettes, qui coopèrent avec des rainures correspondantes du logement de type calotte (34) du support de roue (16).
